# EUROPEAN PATENT APPLICATION

(11) **EP 4 401 207 A1**
(43) Date of publication of application: **17.07.2024**
(21) Application number: 22867563.3
(22) Date of filing: 29.07.2022
(51) Int. Cl.: H01M 50/105, H01M 50/124, B29C 65/00, B29C 65/18, B29L 31/00

(54) **SEALING METHOD FOR POUCH TYPE SECONDARY BATTERY, MANUFACTURING METHOD FOR POUCH TYPE SECONDARY BATTERY, SEALING DEVICE FOR POUCH TYPE SECONDARY BATTERY, AND POUCH TYPE SECONDARY BATTERY MANUFACTURED USING SAME**

(30) Priority: 08.09.2021 KR 20210120045
(71) Applicant: LG Energy Solution, Ltd., Seoul 07335 (KR)
(72) Inventor: KIM, Soon, Daejeon 34122 (KR); KIM, Dong Yeon, Daejeon 34122 (KR); KONG, Jin Hak, Daejeon 34122 (KR)
(74) Representative: Goddar, Heinz J.
(86) International application number: PCT/KR2022/011243
(87) International publication number: WO 2023/038294

(57) **Abstract**

The present invention relates to a method for sealing a pouch-type secondary battery and may provide a method for sealing a pouch-type secondary battery, the method including: a first sealing process of vertically pressing a sealing area of upper and lower pouches through a sealing apparatus; and a second sealing process of moving the sealing apparatus outward from the inside of the pouch in the state of pressing the sealing area of the upper and lower pouches through the sealing apparatus.

## Description

### TECHNICAL FIELD

### CROSS-REFERENCE TO RELATED APPLICATION

The present application claims the benefit of the priority of Korean Patent Application No. 10-2021-0120045, filed on September 08, 2021, which is hereby incorporated by reference in its entirety.

### TECHNICAL FIELD

The present invention relates to a method for sealing a pouch-type secondary battery, a method for manufacturing the pouch-type secondary battery, an apparatus for sealing the pouch-type secondary battery, and a pouch-type secondary battery manufactured using the same, and more particularly, to a method for sealing a pouch-type secondary battery, in which an occurrence of a poly-ball formed in a sealing layer of an inner space of a pouch is minimized, or a length of the generated poly-ball is minimized to improve quality of the secondary battery, a method for manufacturing the pouch-type secondary battery, an apparatus for sealing the pouch-type secondary battery, and a pouch-type secondary battery manufactured using the same.

### BACKGROUND ART

In recent, as technical development and demands for mobile devices are increasing, demands for batteries as energy sources are rapidly increasing. Thus, many studies on batteries which are capable of meeting various demands have been conducted.

Typically, there are high demands for prismatic-type batteries and pouch-type secondary batteries which are capable of being applied to products such as mobile phones having thin thicknesses in terms of the shapes of the batteries. Also, there are high demands for lithium secondary batteries such as lithium ion batteries and lithium ion polymer batteries, which have high energy densities, high discharge voltages, and excellent safety in terms of the materials of the batteries.

Recently, the pouch type battery in which the stack/folding type electrode assembly is built in a pouch-type battery case provided as an aluminum lamination sheet is attracting much attention due to its low manufacturing cost, small weight, easy shape deformation, and the like, and thus, this is evidenced by gradually increasing in usage of stacked or stack/folding type electrode assembly is gradually increasing.

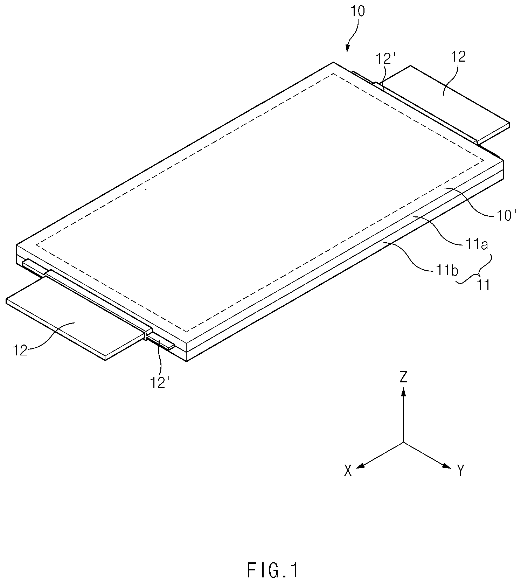

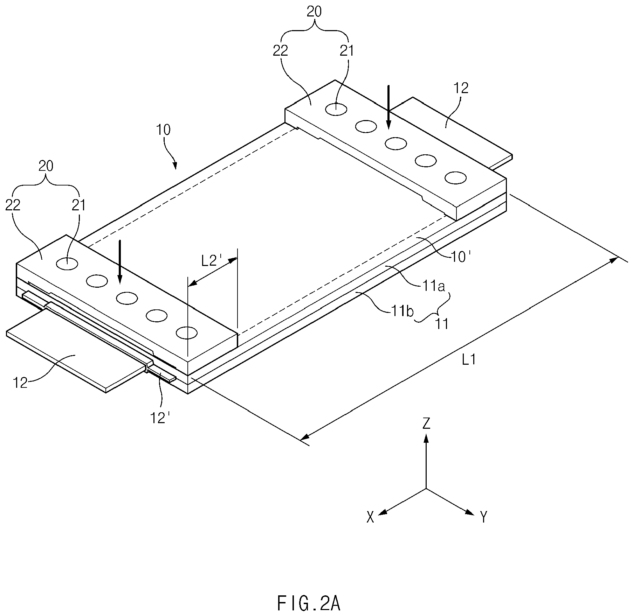

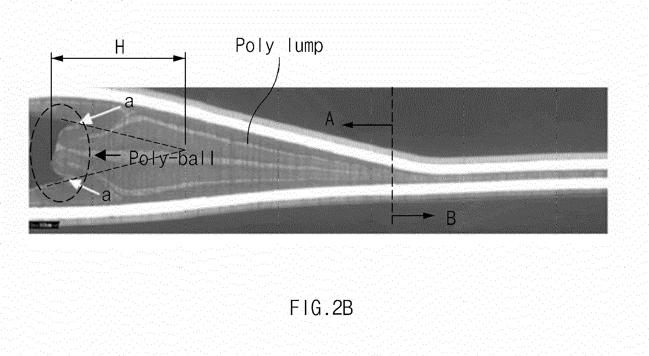

FIG. 1 illustrates a typical pouch-type secondary battery 10, and FIG. 2 illustrates a conventional sealing apparatus 20 for sealing the pouch-type secondary battery 10 together with the pouch-type secondary battery 10 of FIG. 1.

Referring to FIG. 1, the pouch-type secondary battery 10 includes a pouch 10 including upper and lower pouches 11a and 11b and an electrode tab 12 provided to electrically connect the pouch 10. An electrolyte is injected into the pouch 11 in a state in which the pouch 11 is opened, and the electrode tab 12 protrudes to the outside of the pouch 11 to extend from an electrode assembly (not shown) to the inside of the pouch 11. In addition, the pouch-type secondary battery 10 has a sealing area 10' that is sealed to seal the pouch 11 along an edge of the pouch 11.

In this case, a sealing layer (not shown) may be formed on a bonding surface of upper and lower pouches 11a and 11b corresponding to the sealing area10' . In addition, a film layer 12' may be formed on a bonding surface of the pouch 11 corresponding to the sealing area 10' and the electrode tab 12.

Here, a sealing layer (not shown) and the film layer 12' may be generally made of a synthetic resin material such as polypropylene and may be heated and melted by a sealing apparatus 20 to seal the sealing area 10' of the pouch 11, thereby sealing the pouch 11.

In more detail, the sealing apparatus 20 may be installed to be movable vertically in the upper and lower portions of the sealing area 10' of the pouch 11 to press the sealing area 10' of the pouch 11 by the vertical movement. Here, as illustrated in FIG. 2a, the sealing apparatus 20 may vertically press the sealing area 10' of the pouch 11 at a high temperature through a heating part 21 and a pressing part 22, in which the heating part 21 is embedded, to seal the pouch 11.

However, since the conventional sealing apparatus 20 presses the sealing area 10' of the pouch-type secondary battery 10 only in the vertical direction, when excessive sealing of the pouch 11 occurs, as illustrated in FIG. 2b, a poly lump in which the sealing layer is lumped may be formed on a peripheral portion A of the pressed portion B that is pressed by the sealing apparatus 20. In addition, a poly-ball protruding toward an inner space of the pouch 11 may be formed in one direction of the poly lump.

As illustrated in FIG. 2b, the poly-ball may form an edge a forming a predetermined angle with the sealing layer disposed in the inner space of the pouch 11. Here, the edge a may be an area, which is formed most concavely toward an outer space of the pouch 11 in an connection area between the poly-ball and the sealing layer. Here, when the edge a of the poly-ball is sharply formed, since it is very vulnerable to cracking due to a gas pressure generated inside a cell, there is a problem that may cause quality issues of the finished pouch-type secondary battery such as insulation problem.

### DISCLOSURE OF THE INVENTION

### TECHNICAL PROBLEM

The present invention is to solve the above problems, and an object of the present invention is to provide a method for sealing a pouch-type secondary battery, in which an occurrence of a poly-ball formed in a sealing layer of an inner space of a pouch is minimized, or a length of the generated poly-ball is minimized to improve quality of the secondary battery, a method for manufacturing the pouch-type secondary battery, an apparatus for sealing the pouch-type secondary battery, and a pouch-type secondary battery manufactured using the same.

### TECHNICAL SOLUTION

For the above purpose, the present invention relates to a method for sealing a pouch-type secondary battery and may provide a method for sealing a pouch-type secondary battery, the method including: a first sealing process of vertically pressing a sealing area of upper and lower pouches through a sealing apparatus; and a second sealing process of moving the sealing apparatus outward from the inside of the pouch in the state of pressing the sealing area of the upper and lower pouches through the sealing apparatus.

In the first sealing process, the sealing area of the upper and lower pouch may be pressed at a temperature exceeding room temperature to thermally fuse a sealing layer of the sealing area.

In the second sealing process, a sealing layer of the sealing area may be pushed outward from the inside of the pouch while pressing the sealing area of the upper and lower pouches at a temperature exceeding room temperature so that the sealing layer is thermally fused.

A sealing layer of the sealing area of the upper and lower pouches may include a polypropylene resin.

In addition, the present invention may provide a method for manufacturing a pouch-type secondary battery, the method including: an accommodation process of accommodating an electrode assembly between upper and lower pouches; an initial sealing process of sealing a partial sealing area of a sealing area of the upper and lower pouches; a final sealing process of sealing a remaining unsealed area of the sealing area of the upper and lower pouches through the method for sealing the pouch-type secondary battery.

In addition, the present invention may provide an apparatus for sealing a pouch-type secondary battery, which seals a pouch of a secondary battery, the apparatus including: a heating part configured to heat and melt a sealing area of upper and lower pouches of the secondary battery; and a pressing part configured to accommodate the heating part therein and press and seal the sealing area of the upper and lower pouches, which is heated by the heating part, wherein a length of a width of the pouch of the pressing part in a longitudinal direction is less than 0.1% to 4% of a length of the pouch in the longitudinal direction.

In the pressing part, a sealing layer of the sealing area may be pushed outward from the inside of the pouch while pressing the sealing area of the upper and lower pouches at a temperature exceeding room temperature so that the sealing layer is thermally fused.

In addition, the present invention may provide a pouch-type secondary battery including: an electrode assembly; and a pouch in which the electrode assembly is mounted in an inner space formed between upper and lower pouches, wherein a sealing layer of an sealing area of the upper and lower pouches is thermally fused to seal the electrode assembly, wherein the thermally fused sealing layer is pushed in a direction of an inner space due to the pressing so that a protrusion is formed toward the inner space, and the protrusion has an protrusion angle formed at an obtuse angle with respect to the sealing layer.

An edge of the protrusion may be curvedly connected to the sealing layer.

The protrusion may be formed to have a protrusion length of 45 µm or less.

A sealing layer of the sealing area of the upper and lower pouches may include a polypropylene resin.

### ADVANTAGEOUS EFFECTS

The method for sealing the pouch-type secondary battery according to the present invention may include the second sealing process of moving the sealing apparatus outward from the inside of the pouch in the state of pressing the sealing area through the sealing apparatus after the first sealing process of pressing the sealing area of the upper and lower pouches through the sealing apparatus to induce the pushing of the sealing layer, which is melted by the heating, toward the outside of the pouch, thereby minimizing the occurrence of the poly-ball in the inner space of the pouch and also minimizing the length of the occurring poly-ball.

In addition, in the method for sealing the pouch-type secondary battery according to the present invention, the sealing may be performed using the sealing apparatus including the pressing part, of which the length of the width corresponding to the longitudinal direction of the pouch is formed less than 0.1% to 4% of the length of the pouch in the longitudinal direction, to minimize the occurrence of the poly-ball in the inner space of the pouch and also minimize the length of the occurring poly-ball.

### BRIEF DESCRIPTION OF THE DRAWINGS

FIG. 1 is a perspective view illustrating a configuration of a pouch-type secondary battery.
FIG. 2a is a perspective view illustrating a state of sealing the pouch-type secondary battery of FIG. 1 by using a conventional sealing apparatus.
FIG. 2b is a cross-sectional image illustrating a configuration of a poly-ball of the pouch-type secondary battery that is sealed using the conventional sealing apparatus of FIG. 2a.
FIG. 3 is a perspective view illustrating a state of sealing the pouch-type secondary battery of FIG. 1 by using a sealing apparatus according to the present invention.
FIG. 4 is a flowchart illustrating a method for sealing a pouch-type secondary battery according to the present invention.
FIG. 5 is a flowchart illustrating a method for manufacturing a pouch-type secondary battery according to the present invention.
FIG. 6a is a side cross-sectional view illustrating a protrusion angle and a length of the poly-ball of the pouch-type secondary battery that is sealed using the conventional sealing apparatus of FIG. 2a.
FIG. 6b is a side cross-sectional view illustrating a protrusion angle and a length of a protrusion part of the pouch-type secondary battery that is sealed using the sealing apparatus of FIG. 3 according to the present invention.
FIG. 6c is an image illustrating experimental examples of the poly-ball of the pouch-type secondary battery that is sealed using the conventional sealing apparatus of FIG. 2a.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to a method for sealing a pouch-type secondary battery and provides a method for sealing a pouch-type secondary battery, which includes a first sealing process (S10) of vertically pressing a sealing area 10' of upper and lower pouches 11a and 11b through a sealing apparatus 100 and a second sealing process (S20) of moving the sealing apparatus 100 outward from the inside of the pouch 11 in the state of pressing the sealing area 10' of the upper and lower pouches 11a and 11b through the sealing apparatus 100.

Here, the sealing layer of the sealing area 10' of the upper and lower pouches 11a and 11b may include a polypropylene resin, and a poly-ball may be formed on the sealing layer.

First, before describing the first sealing process (S10) and the second sealing process (S20) of the present invention, the sealing apparatus 100 used in the present invention will be described first.

The sealing apparatus 100 according to the present invention may be an apparatus 100 for sealing the pouch-type secondary battery 10, which is configured to seal a pouch 1 of the secondary battery, and include a heating part 110 that heats and melts a sealing area 10' of upper and lower pouches 11a and 11b of the secondary battery and a pressing part 120 that accommodates the heating part 110 therein and presses and seals the sealing area 10' of the upper and lower pouches 11a and 11b, which is heated by the heating part 110.

Here, the heating part 110 is configured to heat and melt the sealing area 10' of the upper and lower pouches 11a and 11b of the pouch-type secondary battery 10 and may have configurations.

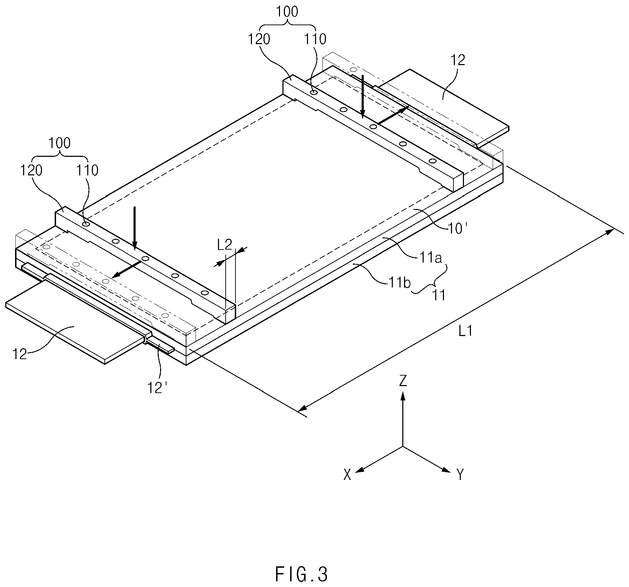

For example, as illustrated in FIG. 3, the heating part 110 may be formed as a plurality of holes formed in an upper portion of the pressing part 120 to inject a high-temperature fluid into an inner space of the pressing part 120.

That is, the sealing apparatus 100 of the present invention may adjust the high-temperature fluid into the heating part 110 through a hose to increase in temperature of the pressing part 120, thereby adjusting a sealing temperature.

However, the configuration of the heating part 110 is not limited to the above-described configuration, and thus, the heating part 120 may have any configuration as long as the heating part 110 is configured to heat the pressing part 120.

The pressing part 120 is configured to accommodate the heating part 110 therein and press and seal the sealing areas 10' of the upper and lower pouches 11a and 11b, which is heated by the heating part 110 and may have various configurations.

Particularly, the pressing part 120 may not only press and seal the sealing area 10' of the upper and lower pouches 11a and 11b, but also push a sealing layer of the sealing area 10' outward from the inside of the pouch while pressing the sealing area 10' of the upper and lower pouches 11a and 11b at a temperature above room temperature so that the sealing layer is thermally fused.

In addition, the pressing part 120 may have various shapes, and as illustrated in FIG. 3, a stepped portion corresponding to a stepped shape of an electrode tab 12, a film layer 12' and a pouch 11 may be formed on a bottom surface of the pressing part 120.

In addition, the pressing part 120 may have various sizes, heights, and widths.

Here, in the pressing part 120 according to the present invention, in order to minimize an occurrence of a poly-ball, which may be formed by pushing the sealing layer into the inner space of the pouch 11 through the pressing, and a size of the occurring poly-ball, a width of the pressing part 120 may be formed to be smaller.

Specifically, it is preferable that the pressing part 120 of the sealing apparatus 100 according to the present invention has a width L₂ less than a width L₂' of a pouch 11 of a pressing part 21 of the conventional sealing apparatus 20 in a longitudinal direction to minimize a pressing surface with the sealing area 10'.

More specifically, since the width L₂' of the pouch 11 of the pressing part 21 of the conventional sealing apparatus 20 in the longitudinal direction is generally 4% of a length L₁ of the pouch 11 in the longitudinal direction (L₁: 250mm, L₂': 10mm), if considering this condition, it is preferable that a length of a width L₂ of the pouch 11 of the pressing part 120 of the sealing apparatus 100 according to the present invention in the longitudinal direction is less than 4% of the length L₁ of the pouch 11 in the longitudinal direction.

For example, when the length of the width L₂ of the pouch 11 of the pressing part 120 in the longitudinal direction is 1 mm (0.4% of the length L₁ of the pouch 11 in the longitudinal direction), a pressing area on which the sealing apparatus 100 of the present invention presses the sealing area 10' of the pouch 11 is 1/10 of that of the pressing part 22 of the conventional sealing apparatus 20. As a result, the sealing apparatus 100 of the present invention has a significantly reduced pressing area when compared to the conventional sealing apparatus 20, and thus, the number of poly-balls occurring by the pressing and a length of each of the occurring poly-balls may be reduced.

However, since the pressing part 120 has to press a certain area of the sealing area 10', it is preferable that the length of the width L₂ of the pouch 11 of the pressing part 120 in the longitudinal direction is 0.1% or more of the length L₁ of the pouch 11 in the longitudinal direction.

Thus, the length of the width L₂ of the pouch 11 of the pressing part 120 of the sealing apparatus 100 according to the present invention in the longitudinal direction may be less than 0.1% to 4% of the length L₁ of the pouch 11 in the longitudinal direction.

Although only two sealing apparatuses 100 disposed above the upper pouch 11a are illustrated in FIG. 3, the number and arrangement of the sealing apparatuses 100 are not limited thereto.

For example, the sealing apparatus 100 according to the present invention may be provided in a pair so as to be disposed to correspond to each other in a vertical direction of the pouch 11. As a result, the pouch 11 may be inserted between the pair of sealing apparatuses 100, and then, the pair of sealing apparatuses 100 may be in close contact with each other to press the sealing area 10' of the upper and lower pouches 11a and 11b.

In addition, the sealing apparatus 100 may be provided to correspond to a formation direction of the electrode tab 12 of the pouch-type secondary battery 10.

As an example, when the electrode tab 12 is a bidirectional cell disposed at each of both ends of the pouch-type secondary battery 10, two or more sealing apparatuses 100 may be provided to move in opposite directions so as to correspond to the formation direction of the electrode tab 12.

As another example, when the electrode tab 12 is a unidirectional cell disposed in one direction of the pouch-type secondary battery 10, the sealing apparatus 100 may be provided to move one direction so as to correspond to the formation direction of the electrode tab 12.

The first sealing process (S10) and the second sealing process (S20) will be described below in earnest.

The first sealing process (S10) may be a process of vertically pressing the sealing area 10' of the upper and lower pouches 11a and 11b through the sealing apparatus 100 to seal the upper and lower pouches 11a and 11b and also may be performed through various methods.

For example, in the first sealing process (S10), the sealing area 10' of the upper and lower pouches 11a and 11b is pressed at a temperature exceeding room temperature to thermally fuse the sealing layer of the sealing area 10', thereby sealing the upper and lower pouches 11a and 11b.

That is, in the first sealing process (S10), the sealing layer applied on the sealing area 10' of the upper and lower pouches 11a and 11b may be heated and thermally fused by the sealing apparatus 100, and the sealing layers of the upper and lower pouches 11a and 11b may be in close contact with each other to seal the upper and lower pouches 11a and 11b.

Here, the sealing layer of the sealing area 10' of the upper and lower pouches 11a and 11b may include a polypropylene resin.

The meaning of the room temperature refers to a temperature range called 'room temperature' in the art. In other words, the room temperature refers to a temperature of a laboratory, etc., in particular, it is an expression of temperature conditions used when experiments are conducted without specifying or controlling a temperature or when samples and substances are left in an indoor space and refers to an indoor air temperature. In general, it is a temperature at which humans lives comfortably and is usually around 15°C to 20°C.

Thus, the temperature above room temperature may be a temperature of 20°C or more, and more specifically, when the sealing layer of the sealing area 10' is the polypropylene resin, the temperature may be set to 160°C to 190°C.

In addition, in the first sealing process, a sealing pressure at which the sealing apparatus 100 presses the sealing area 10' may be set to various pressures and may be, for example, 0.1 MPa to 0.4 MPa.

However, the sealing pressure is not limited thereto and may be variously set according to materials of the pouch and the sealing layer, a height of the sealing layer, and the like.

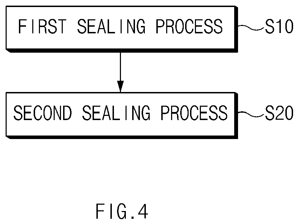

As illustrated in FIG. 4, when the first sealing process (S10) is completed, the second sealing step (S20) of moving the sealing apparatus 100 outward from the inside of the pouch 11 is performed in the state of pressing the sealing area 10' of the pouches 11a and 11b through the sealing apparatus 100.

The second sealing process (S20) may be a process of moving the sealing apparatus 100 outward from the inside of the pouch 11 in the state of pressing the sealing area 10' of the upper and lower pouches 11a and 11b through the sealing apparatus 100 and may be performed through various methods.

Specifically, in the second sealing process (S20), the sealing layer of the sealing area 10' may be pushed outward from the inside of the pouch while pressing the sealing area 10' of the upper and lower pouches 11a and 11b at a temperature exceeding room temperature so that the sealing layer is thermally fused.

Here, a direction in which the sealing apparatus 100 is moved outward from the inside of the pouch 11 may be a direction in which the sealing apparatus 100 is moved from the inside of the pouch 11 toward the electrode tab 12.

For example, in the second sealing process (S20), as illustrated in FIG. 3, the sealing area 10' may be pressed and then moved toward the electrode tab 12 on one area of the sealing area 10' of the pouch 11 in the longitudinal direction.

That is, in the second sealing process (S20), the melted sealing layer may be thermally fused while being pushed outward from the inside of the pouch 11, and thus, growth of the poly-ball formed in the inner space of the pouch 11 may be suppressed to minimize a length of the poly-ball.

Here, as illustrated in FIG. 3, the sealing apparatus 100 includes not only the sealing apparatus 100 disposed above the pouch-type secondary battery 10, but also the pair of sealing apparatuses 100 disposed above and below the pouch-type secondary battery 10.

As described above, the meaning of the room temperature is a temperature range called 'room temperature' in the art and is usually around 15°C to 20°C.

Thus, the temperature above room temperature may be a temperature of 20°C or more, and more specifically, when the sealing layer of the sealing area 10 is the polypropylene resin, the temperature may be set to 160°C to 190°C.

In addition, in the second sealing process, a sealing pressure at which the sealing apparatus 100 presses the sealing area 10' may be set to various pressures and may be, for example, 0.1 MPa to 0.4 MPa. However, the sealing pressure is not limited thereto and may be variously set according to materials of the pouch and the sealing layer, a height of the sealing layer, and the like.

The above-described method for sealing the pouch-type secondary battery may be variously applied in a method for manufacturing the pouch-type secondary battery.

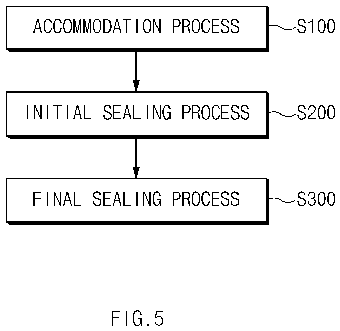

Specifically, as illustrated in FIG. 5, a method for manufacturing a pouch-type secondary battery may include an accommodation process (S100) of accommodating an electrode assembly (not shown) between upper and lower pouches 11a and 11b, an initial sealing process (S200) of sealing a partial sealing area of a sealing area 10' of the upper and lower pouches 11a and 11b, and a final sealing process (S300) of sealing a remaining unsealed area of the sealing area 10' of the upper and lower pouches 11a and 11b through the above-described method for sealing the pouch-type secondary battery.

The accommodation process (S100) may be a process of accommodating the electrode assembly (not shown) between the upper and lower pouches 11a and 11b and may be performed through various methods.

Here, the electrode assembly (not shown) may be provided as one of a jelly-roll type electrode assembly in which one or more negative electrodes, separators, and positive electrodes are successively stacked, a stack/folding type electrode assembly in which a unit cell, in which a negative electrode, a separator, and a positive electrode are successively stacked, is disposed on a separator having a long film shape and then is wound in one direction, and stack/folding type electrode assembly in which a unit cell, in which a negative electrode, a separator, and a positive electrode are successively stacked, is disposed on a separator having a long film shape and then is wound in a zigzag direction.

Specifically, the accommodation process (S100) may be performed by accommodating the electrode assembly (not shown) in an inner space (not shown) of the upper and lower pouches 11a and 11b before being sealed.

When the receiving process (S100) is completed, the initial sealing process (S200) of sealing the initial sealing area of the sealing areas 10' of the upper and lower pouches 11a and 11b may be performed.

The initial sealing process (S200) may be a process of sealing the partial sealing area of the sealing areas of the upper and lower pouches 11a and 11b and may be performed through various methods.

As an example, the initial sealing process (S200) may be performed by sealing a partial area except for a predetermined length of both ends of the pouch 11 in a longitudinal direction L₁ of the pouch 11 on the sealing area 10a of the upper and lower pouches 11a and 11b.

As another example, the initial sealing process (S200) may be performed by sealing areas of remaining three surfaces except for one sealing area on the sealing area 10a having four surfaces of the upper and lower pouches 11a and 11b.

In addition, the initial sealing process (S200) may be performed by only pressing the sealing area 10' of the upper and lower pouches 11a and 11b using the conventional sealing apparatus 20, which is illustrated in FIG. 2a and also may be performed by pressing and moving the sealing area 10' of the upper and lower pouches 11a and 11b using the sealing apparatus 100 according to the present invention and the method for sealing the pouch-type secondary battery according to the present invention, which are illustrated in FIG. 3.

After the initial sealing process (S200), the final sealing process (S300) of sealing the remaining unsealed sealing area of the sealing area 10' of the upper and lower pouches 11a and 11b is performed.

Here, the final sealing process (S300) may be a process of sealing the remaining unsealed sealing area of the sealing area of the upper and lower pouches 11a and 11b and may be performed through various methods using the method for sealing the pouch-type secondary battery according to the present invention.

That is, in the final sealing process (S300), the remaining unsealed sealing area of the sealing area 10' may be sealed using the above-described method for sealing the pouch-type secondary battery, and thus, the entire sealing area 10' disposed on edges of the upper and lower pouches 11a and 11b may be sealed to seal the pouch-type secondary battery 10.

Various processes may be additionally performed between the initial sealing process (S200) and the final sealing process (S300).

For example, an electrolyte injection process of injecting an electrolyte into the pouch 11 and a degassing process of removing a gas contained in the electrolyte may be additionally performed between the initial sealing process (S200) and the final sealing process (S300).

The present invention may provide the pouch-type secondary battery 10 manufactured by the method for sealing the pouch-type secondary battery and the method for manufacturing the pouch-type secondary battery by using the above-described sealing apparatus.

Here, the pouch-type secondary battery 10 may include an electrode assembly (not shown) and a pouch 11 in which the electrode assembly (not shown) is mounted in an inner space formed between upper and lower pouches 11a and 11b and may be a pouch-type secondary battery in which the electrode assembly (not shown) is sealed by thermally sealing a sealing layer of a sealing area 10' of the upper and lower pouches 11a and 11b, i.e., a pouch-type secondary battery in which the thermally fused sealing layer is pushed in a direction of the inner space due to the pressing so that a protrusion is formed toward the inner space.

In this case, a material of the sealing layer may include a poly-based resin such as polypropylene, and the protrusion may correspond to the poly-ball in the conventional pouch-type secondary battery.

Here, the protrusion may be formed to protrude toward the inner space of the pouch 11 by pushing the thermally-fused sealing layer to a peripheral portion A of a pressed portion B due to a pressure applied to the pressed portion B.

In this case, the protrusion may be formed to have a protrusion angle (θ) greater than a poly-ball occurring in the conventional pouch-type secondary battery.

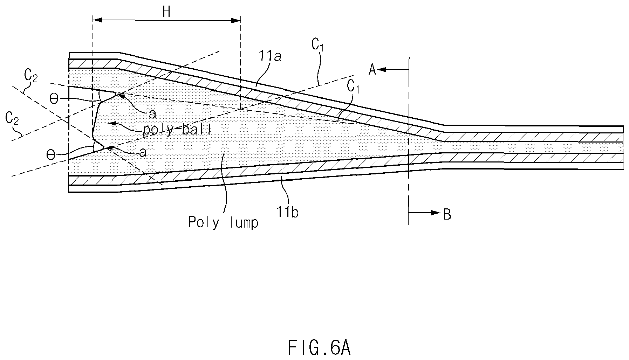

Here, as illustrated in FIGS. 6a to 6b, the protrusion angle θ may be defined as an angle in the inner space of the pouch, which is formed by a first connection line C1 connecting the sealing layer of the upper pouch 11a or the lower pouch 11b to an edge a of the poly-ball (protrusion) and a second connecting line C2 connecting one surface of the poly-ball (protrusion) formed closest to the sealing layer of the upper pouch 11a or the lower pouch 11b to the edge a of the poly-ball (protrusion) in the inner space of the pouch 11 based on a cross-section in a lateral direction of the pouch-type secondary battery 10.

Here, in the case of the pouch-type secondary battery sealed using the conventional sealing apparatus 20 and the conventional sealing method, as illustrated in FIG. 6a, since the poly-ball is formed to protrude relatively large and long toward the inner space of the pouch, the protrusion angle θ of the poly-ball may be formed at an acute angle of less than 90 degrees.

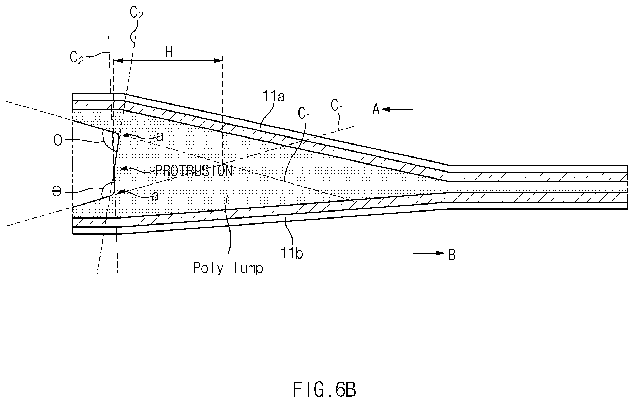

However, in the case of the pouch-type secondary battery sealed using the sealing apparatus 100 of the present invention and the method for sealing the secondary battery according to the present invention, as illustrated in FIG. 6b, since the protrusion (poly-ball) is formed to protrude relatively small and short toward the inner space of the pouch, the protrusion angle θ of the protrusion may be formed at an obtuse angle. (90°<θ<180°)

Here, when the protrusion angle θ has the obtuse angle, the edge a of the protrusion may be curvedly connected to the sealing layer of the upper pouch 11a and the lower pouch 11b. That is, the edge a of the protrusion may not be sharply formed, but be connected to the sealing layer to form a concave curved surface in a direction opposite to the protrusion direction, thereby preventing a risk of cracking of the pouch from occurring.

The protrusion may have a protrusion length less than the poly-ball occurring in the conventional pouch-type secondary battery.

Here, in a protrusion length H, as illustrated in FIGS. 6a to 6b, a first connection line C1 connecting the sealing layer of the upper pouch 11a and the lower pouch 11b to the edge a of the poly-ball (protrusion) in the inner space of the pouch 11 may be defined as a length from a point, at which the sealing layer and the edge a meet each other in a poly lump, to a portion at which the poly ball (protrusion) most protrudes toward the inner space of the pouch 11, based on the cross-section in the lateral direction of the pouch-type secondary battery 10. In addition, the protrusion length H may have an inverse relationship with the above-described protrusion angle θ.

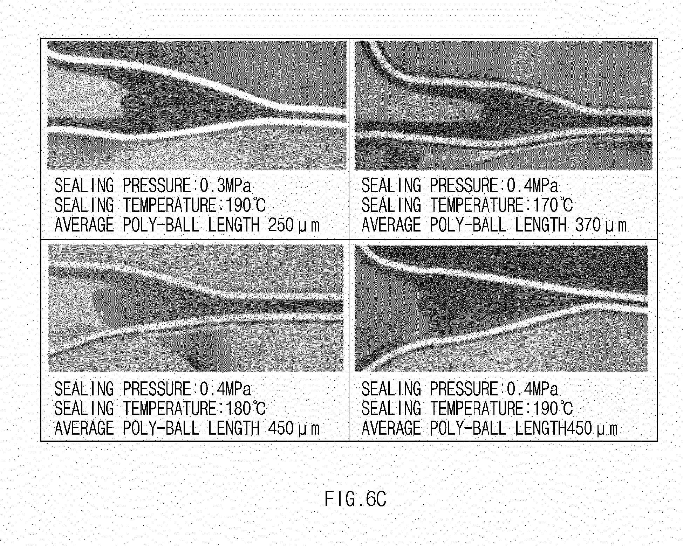

Here, in the case of the pouch-type secondary battery sealed through the conventional sealing apparatus 20 and the conventional sealing method, it is confirmed that a poly-balls having a maximum average length of 450 um is formed. (see FIG. 6c)

In consideration of this configuration, the sealing apparatus 100 (L₂: 1 mm) having a pressing area of 1/10 when compared to the conventional sealing apparatus 20 is used under the same pressure and temperature conditions as the conventional sealing apparatus 20 and the conventional sealing method, and when sealing the pouch 11 through the method for sealing the pouch-type secondary battery according to the present invention, it is expected that the length H of the protrusion is formed to be 45 um or less, which is at least 1/10 of the maximum average length of the poly-ball.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

10: Pouch-type secondary battery
10': Sealing area
11: Pouch
11a: Upper pouch
11b: Lower pouch
12: Electrode tab
12': Film layer
20: Sealing apparatus
21: Heating part
22: Pressing part
100: Sealing apparatus
110: Heating part
120: Pressing part
S10: First sealing process
S20: Second sealing process
S100: Accommodation process
S200: Initial sealing process
S300: Final sealing process
a: Edge of poly-ball (edge of protrusion)
H: Protrusion length
Θ: Protrusion angle
L₁: Length of pouch-type secondary battery in longitudinal direction
L₂: Width corresponding to pouch of pressing part of sealing apparatus of the present invention in longitudinal direction
L₂' : Width corresponding to pouch of pressing part of sealing apparatus according to related art in longitudinal direction

## Claims

1. A method for sealing a pouch-type secondary battery, the method comprising:
a first sealing process of vertically pressing a sealing area of upper and lower pouches through a sealing apparatus; and
a second sealing process of moving the sealing apparatus outward from the inside of the pouch in the state of pressing the sealing area of the upper and lower pouches through the sealing apparatus.

2. The method of claim 1, wherein, in the first sealing process, the sealing area of the upper and lower pouch is pressed at a temperature exceeding room temperature to thermally fuse a sealing layer of the sealing area.

3. The method of claim 1, wherein, in the second sealing process, a sealing layer of the sealing area is pushed outward from the inside of the pouch while pressing the sealing area of the upper and lower pouches at a temperature exceeding room temperature so that the sealing layer is thermally fused.

4. The method of claim 1, wherein a sealing layer of the sealing area of the upper and lower pouches comprises a polypropylene resin.

5. A method for manufacturing a pouch-type secondary battery, the method comprising:
an accommodation process of accommodating an electrode assembly between upper and lower pouches;
an initial sealing process of sealing a partial sealing area of a sealing area of the upper and lower pouches;
a final sealing process of sealing a remaining unsealed area of the sealing area of the upper and lower pouches through the method for sealing the pouch-type secondary battery of any one of claims 1 to 4.

6. An apparatus for sealing a pouch-type secondary battery, which seals a pouch of a secondary battery, the apparatus comprising:
a heating part configured to heat and melt a sealing area of upper and lower pouches of the secondary battery; and
a pressing part configured to accommodate the heating part therein and press and seal the sealing area of the upper and lower pouches, which is heated by the heating part,
wherein a length of a width of the pouch of the pressing part in a longitudinal direction is less than 0.1% to 4% of a length of the pouch in the longitudinal direction.

7. The apparatus of claim 6, wherein, in the pressing part, a sealing layer of the sealing area is pushed outward from the inside of the pouch while pressing the sealing area of the upper and lower pouches at a temperature exceeding room temperature so that the sealing layer is thermally fused.

8. A pouch-type secondary battery comprising:
an electrode assembly; and
a pouch in which the electrode assembly is mounted in an inner space formed between upper and lower pouches,
wherein a sealing layer of an sealing area of the upper and lower pouches is thermally fused to seal the electrode assembly,
wherein the thermally fused sealing layer is pushed in a direction of an inner space due to the pressing so that a protrusion is formed toward the inner space, and
the protrusion has an protrusion angle formed at an obtuse angle with respect to the sealing layer.

9. The pouch-type secondary battery of claim 8, wherein an edge of the protrusion is curvedly connected to the sealing layer.

10. The pouch-type secondary battery of claim 8, wherein the protrusion is formed to have a protrusion length of 45 µm or less.

11. The pouch-type secondary battery of claim 8, wherein the sealing layer of the sealing area of the upper and lower pouches comprises a polypropylene resin.
